# FASCICULE DE BREVET EUROPEEN

(11) **EP 2 618 956 B1**
(45) Date de publication et mention de la délivrance du brevet: **02.07.2014**
(21) Numéro de dépôt: 11768064.5
(22) Date de dépôt: 23.09.2011
(51) Int. Cl.: B23K 9/028, B23K 37/02, B23K 37/053

(54) **DISPOSITIF D'AIDE AU TRAVAIL DE PIECES MECANIQUES COMPORTANT UN CHEMIN DE GUIDAGE EN PLUSIEURS PARTIES**
VORRICHTUNG ZUR UNTERSTÜTZUNG DER BEARBEITUNG VON MECHANISCHEN TEILEN, EINSCHLIESSLICH EINER FÜHRUNGSSCHIENE MIT MEHREREN BESTANDTEILEN
DEVICE PROVIDING ASSISTANCE IN THE WORKING OF MECHANICAL PARTS, INCLUDING A GUIDE TRACK COMPRISING MULTIPLE COMPONENTS

(30) Priorité: 24.09.2010 FR 1003798
(43) Date de publication de la demande: 31.07.2013
(73) Titulaire: Serimax, 77290 Mitry-Mory (FR)
(72) Inventeur: DAGENAIS, Jean-François, F-13260 Cassis (FR)
(74) Mandataire: Renard, Alexis
(86) Numéro de dépôt international: PCT/FR2011/000521
(87) Numéro de publication internationale: WO 2012/038622

(56) Documents cités:
- JP-A- 2002 001 582
- US-A- 3 807 047
- US-A- 4 493 150
- US-A- 5 126 523
- US-A- 5 165 160

## Description

L'invention a trait à un dispositif d'aide au travail de pièces mécaniques conformément au préambule de la revendication 1 (voir, par example, US 5 126 523).

Bien que l'invention s'inscrive dans le cadre du travail de pièces mécaniques en général, telles que, par exemple, des corps de vannes, des profilés, des rails, ou autres, on s'intéresse ici plus particulièrement au travail de tubes, notamment de tubes à usage dans le domaine du pétrole et du gaz (forage, exploitation ou acheminement), aux fins d'illustration uniquement.

En effet, on comprend aisément que certaines difficultés rencontrées lors du travail de tubes pétroliers peuvent être retrouvées, à l'identique ou sous une forme légèrement différente, dans le travail de tubes à usage dans d'autres domaines, d'une part, et, d'autre part, de pièces mécaniques quelconques. Ceci est le cas, en particulier, à chaque fois que ces difficultés sont liées, directement ou indirectement, à un encombrement et/ou une masse importants de la pièce, qui rendent délicat le déplacement de la pièce à travailler.

Le terme "travail" est à prendre ici dans un sens très large comme couvrant toute opération réalisée à des fins industrielles sur la pièce mécanique, qu'il en résulte ou non une modification de forme, d'aspect, d'état de surface, de fonction, de liaison avec d'autres pièces mécaniques. Par exemple, une opération de mesure, et, plus généralement toute opération de métrologie, est ainsi considérée ici comme un travail effectué sur la pièce mécanique.

D'autres travaux que l'on peut effectuer sur des pièces mécaniques comprennent, à titre d'exemples non limitatifs, l'assemblage par soudage de pièces entre elles, le meulage et/ou la découpe d'une pièce, des tirs de radiographie, ou encore toute opération de contrôle, en particulier non destructif.

Pour certains travaux, il est parfois plus avantageux d'attacher les outils au tube, ou à la pièce mécanique, plutôt qu'à un poste de travail, par exemple. Cela concerne en particulier les travaux qui nécessitent de définir un référentiel lié au tube ou à la pièce mécanique. Dans le cas de tubes, on peut citer par exemple le soudage des extrémités de deux tubes entre elles, la mesure et/ou la rectification de la circularité d'un tube, ou encore la découpe d'un tube en tronçons.

Dans ce cas, on prévoit un flasque qui supporte les outils et qui vient s'attacher autour du tube ou de la pièce mécanique.

Pour faciliter son installation sur le tube ou la pièce, le flasque peut être réalisé en deux pièces, ou plus, assemblées entre elles avec possibilité de déplacement relatif dans un plan commun, d'une position d'ouverture du flasque, où les pièces sont écartées les unes des autres, jusqu'à une position de fermeture du flasque, où ces pièces se trouvent réunies autour du tube ou de la pièce à travailler. Un dispositif de serrage peut être actionné, dans la position de fermeture du flasque, pour mettre en appui mutuel les pièces en question, ou à proximité les unes des autres, et assurer le maintien de cette position relative des pièces, malgré les efforts qui peuvent être générés par les tubes, en particulier par leur débattement.

La plupart des travaux à réaliser sur des tubes, et plus généralement des pièces mécaniques, nécessitent un déplacement précis et contrôlé des outils par rapport au tube ou à la pièce mécanique. Dans le cas de pièces de forme de révolution, comme les tubes par exemple, de nombreux travaux exigent que le ou les outils soient déplacés autour de la périphérie de la pièce.

Comme il est peu pratique de mettre en rotation des tubes ou des pièces mécaniques lourdes et/ou encombrants, on préfère organiser un déplacement des outils par rapport au flasque, lequel se trouve attaché au tube ou à la pièce avec des possibilités de déplacement limitées.

Les solutions existantes n'ayant que partiellement donné satisfaction, la Demanderesse s'est fixé comme objectif d'améliorer la situation.

Le dispositif proposé est défini dans la revendication 1.

Dans le dispositif proposé, les rails se positionnent les uns par rapport aux autres de manière à créer un chemin propre à supporter avec guidage un ou plusieurs outils ou porte-outils, indépendamment du positionnement des pièces formant le flasque et supportant ces rails.

En d'autres termes, le positionnement des rails est découplé du positionnement des pièces formant le flasque. Les pièces formant le flasque peuvent être fabriquées/usinées avec des tolérances assez larges quant à leurs dimensions. En pratique, seuls les rails, en particulier leurs faces d'extrémités reliées entre elles par coopération de forme, ont besoin d'être fabriquées/usinées avec précision. On comprend que les coûts de fabrication du dispositif se trouvent réduits dans une large mesure.

En outre, lorsque des efforts importants s'appliquent au flasque, par exemple en réaction à une sollicitation du tube en une position éloignée du flasque, ou aux efforts générés par le travail (correction de circularité du tube notamment), ces efforts, du fait du montage des rails sur des supports élastiques, ne sont pas transmis au chemin de guidage. Ceci permet de limiter au flasque les mesures constructives prises pour améliorer la résistance du dispositif.

Au surplus, à supposer que les efforts en question provoquent des déformations du flasque, ces déformations n'influent ni sur le positionnement du chemin de guidage par rapport au flasque, ni sur sa forme. On conserve ainsi un chemin de guidage intègre, quelles que soient les conditions de sollicitation du dispositif.

Des caractéristiques optionnelles du dispositif proposé, complémentaires, additionnelles ou de substitution sont énoncées ci-après :
- Lesdites surfaces homologues comprennent deux surfaces complémentaires venant en appui mutuel dans la position de travail.
- Chaque rail présente une ou plusieurs surfaces de guidage et ladite liaison comprend un arrangement adapté pour assurer une continuité de ces surfaces de guidage dans ladite position de travail.
- Ledit arrangement comprend au moins une languette faisant saillie de la face d'extrémité d'un rail et une rainure ménagée dans la face d'extrémité adjacente d'un rail voisin, la languette et la rainure étant conjointement dimensionnées de manière à s'emboîter l'une dans l'autre au voisinage de la position de fermeture du flasque.
- La languette présente une portion dont la section transversale se rétrécie progressivement en direction de son extrémité libre.
- Ledit arrangement comprend au moins un pion faisant saillie de la face d'extrémité d'un rail et au moins un évidement ménagé dans la face d'extrémité adjacente d'un rail voisin, le pion et l'évidement étant conjointement dimensionnés de manière à s'emboîter l'un dans l'autre au voisinage de la position de fermeture du flasque.
- Le pion présente une allure au moins partiellement hémisphérique, ou cylindrique.
- Le dispositif peut en outre comprendre un jeu de pièces élastiques, intercalées entre les supports et leur rail respectif, dans lequel les pièces élastiques sont déformées à l'actionnement du dispositif de serrage et sont agencées pour que cette déformation génère une pression de contact entre les surfaces d'extrémité desdits rails d'un niveau minimal prédéfini.
- Les pièces élastiques sont agencées de façon que le déplacement des rails par rapport auxdites pièces du flasque s'effectue, au moins au voisinage de la position de fermeture, avec déformation de certaines au moins desdites pièces élastiques.
- Les pièces élastiques sont agencées de manière à travailler chacune en cisaillement lorsque le dispositif de serrage est actionné.
- Certaines au moins des pièces élastiques se présentent sous la forme d'un cylindre en matériau élastique, et chaque cylindre est attaché d'une part à l'un des supports et, d'autre part, à un rail et/ou une pièce dudit flasque.
- Le flasque présente une allure de couronne plate.
- Le chemin de guidage présente une allure annulaire.

D'autres caractéristiques et avantages de l'invention apparaîtront à l'examen de la description ci-après, et des dessins annexés sur lesquels :
- la figure 1 représente une bride externe en situation de travail, vue en perspective isométrique ;
- la figure 2 représente une bride externe selon l'invention, dans un état fermé, vue en perspective isométrique ;
- la figure 3 représente la bride de la figure 2, vue en perspective isométrique, sous un angle différent ;
- la figure 4 représente la bride de la figure 3 vue en coupe selon un plan XY passant par un point A en regardant dans la direction Z ;
- la figure 5 est analogue à la figure 4; en regardant dans la direction opposée à la direction Z ;
- la figure 6 est analogue à la figure 2, la bride étant dans un état ouvert ;
- la figure 7 représente un premier élément de châssis pour la bride des figures 2 à 6, vu en perspective isométrique ;
- la figure 8 représente un second élément de châssis pour la bride des figures 2 à 6, vu en perspective isométrique ;
- la figure 9 représente un troisième élément de châssis pour la bride des figures 2 à 6, vu en perspective isométrique ;
- la figure 10A représente un détail X de la figure 8 ;
- la figure 10B représente une partie de détail de la figure 11, dans une position verrouillée d'une bride selon l'invention, vue en coupe ;
- la figure 11 représente un détail XI de la figure 6 ;
- la figure 12 représente isolément un renfort pour l'élément de châssis de la figure 8, vu en perspective isométrique ;
- la figure 13 représente isolément un pion de centrage, vu en perspective isométrique ;
- la figure 14 représente isolément une languette d'alignement, vue en perspective isométrique ;
- la figure 15 représente une variante de réalisation d'une bride externe selon l'invention ;
- la figure 16 est analogue à la figure 7 pour une variante de réalisation de bride externe ;
- la figure 17 est analogue à la figure 8 pour la variante de réalisation de la figure 16 ;
- la figure 18 est analogue à la figure 9 pour la variante de réalisation de la figure 16 ;
- la figure 19 est analogue à la figure 11 pour la variante de réalisation de la figure 16 ;
- la figure 20 est analogue à la figure 13 pour la variante de réalisation de la figure 16.

Les dessins annexés comportent des éléments de caractère certain et pourront à ce titre non seulement servir à compléter l'invention, mais aussi contribuer à sa définition, le cas échéant.

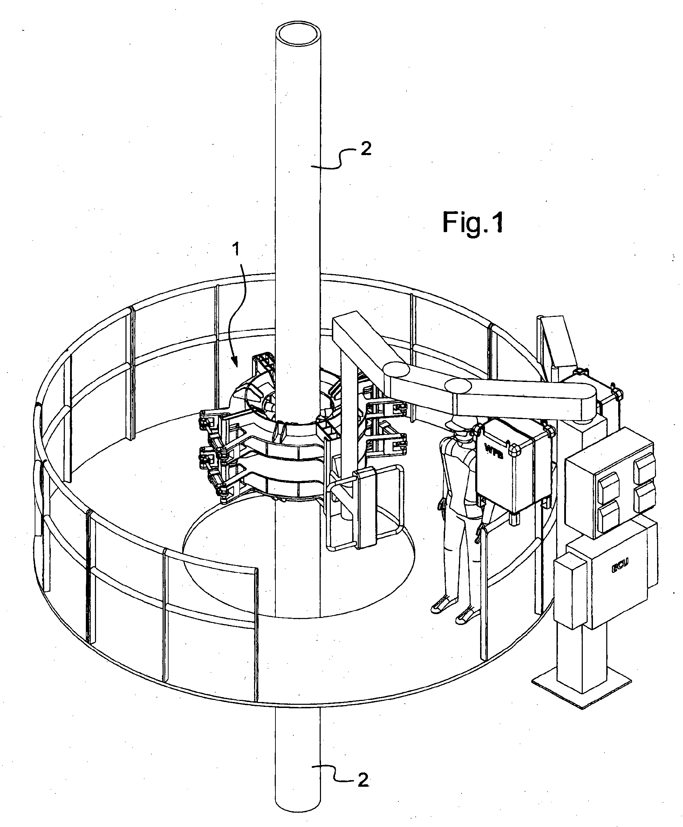

Sur la figure 1, on a représenté une bride de soudage d'un type connu 1, extérieurement disposée à cheval sur des portions d'extrémités respectives de deux tubes 2 destinés à être soudés ensemble.

La bride 1 supporte l'outillage nécessaire à la réalisation d'un cordon de soudure entre les extrémités des tubes 3, à savoir un jeu de torches de soudage ainsi qu'une pluralité d'outils supplémentaires, qui permettent, en combinaison les uns des autres, de réaliser des opérations de soudage sur l'ensemble de la longueur d'un pipeline.

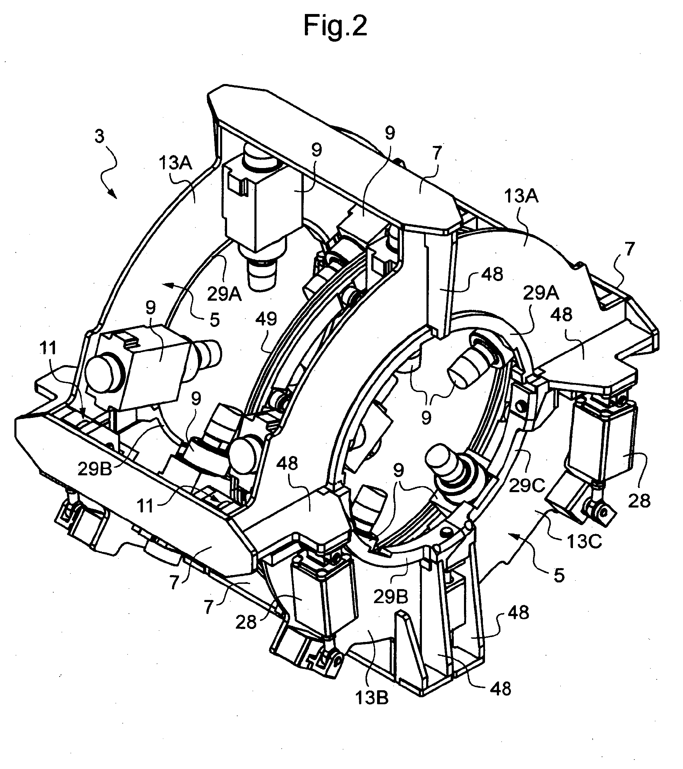

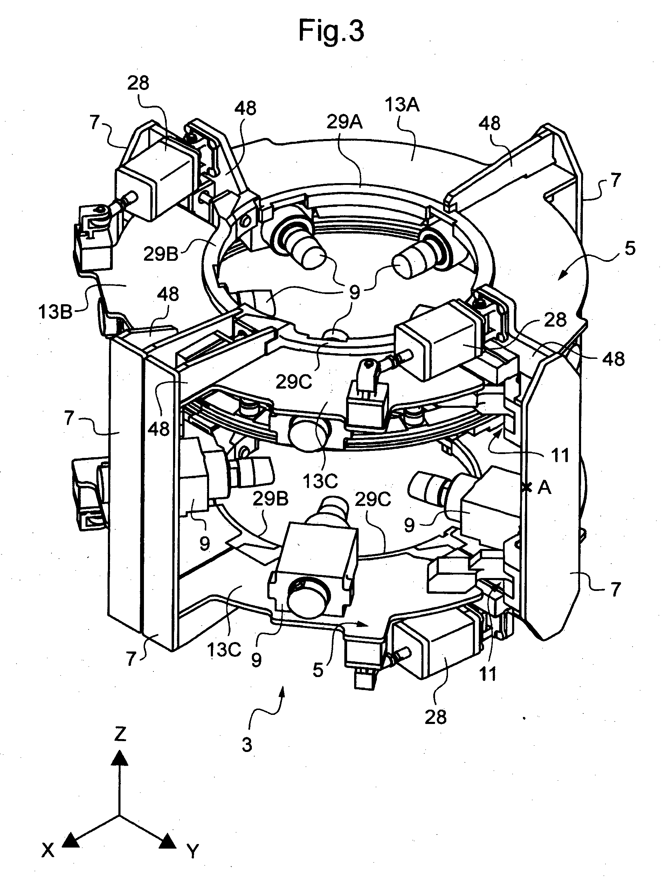

On fait maintenant référence aux figures 2 à 6 pour décrire une bride 3 susceptible de travailler à la manière de la bride de soudage connue 1.

Telle que représentée, la bride 3 est particulièrement adaptée à des opérations de soudage à effectuer sur des tubes dont le diamètre est compris entre 4 pouces et 24 pouces, voire 64 ou 100 pouces. Par conséquent, la bride 1 est adaptée à la plupart des tubes utilisés dans le domaine du pétrole et du gaz, pour l'extraction, le forage ou encore l'approvisionnement.

Cependant, la bride 3 n'est nullement limitée à cette gamme de diamètres, ni aux tubes pétroliers.

D'autre part, la bride 3 n'est pas destinée aux seules opérations de soudage et peut non seulement inclure des outillages supplémentaires, tels que des palpeurs de mesure par exemple, mais encore être dépourvue, pour certaines applications au moins, de torches de soudure.

Dans tous les cas cependant, la bride 3 supporte des outils destinés au travail d'un ou plusieurs tubes et est agencée de manière à venir en prise sur la paroi extérieure de ces tubes.

La bride 3 comprend une paire de flasques 5, qui présentent chacun une allure de couronne plate et sont maintenus fixement en regard l'un de l'autre par des traverses 7 en formant un châssis.

Chaque flasque 5 supporte un système de serrage/positionnement destiné à une portion d'extrémité d'un tube respectif, lequel système comprend plusieurs vérins de serrage 9 fixés sur une face du flasque 5 de manière que leur tête s'étende radialement, dans un plan parallèle à un plan principal du flasque 5, et dans l'espace central de celui-ci.

Chaque flasque 5 peut également supporter des capteurs de déplacement (non représentés), qui permettent de contrôler les mouvements respectifs des vérins de serrage 9 de manière synchronisée.

Chaque flasque 5 peut encore supporter un système de guidage destiné à une portion d'extrémité d'un tube 2 respectif comprenant une pluralité de supports (non représentés), tels que des guides à bille, fixés en une position telle qu'ils s'étendent radialement en direction du centre du flasque 5, dans un plan parallèle au plan principal du flasque 5.

Ainsi équipé, chaque flasque 5 permet de déplacer l'axe central de son tube 2 respectif, jusqu'à une position prédéfinie, voire de déplacer ce tube 3 suivant sa direction longitudinale. La bride 3 permet d'aligner mutuellement les tubes 2 sur lesquels elle est installée, soit sur le diamètre extérieur, soit sur leur diamètre intérieur.

En d'autres termes, telle que décrite, la bride 3 est apte à se fixer sur des portions d'extrémités de tubes 2, à aligner ces extrémités, et à les déplacer jusqu'à venir au voisinage l'une de l'autre. La bride 3 peut supporter des torches pour souder ces extrémités entre elles.

Chaque flasque 5 comprend un jeu de plaques s'étendant chacune suivant un secteur angulaire d'une couronne, et reliées entre elles avec possibilité de pivotement relatif, dans un plan commun, d'une position d'ouverture du flasque 5 où les plaques sont éloignées les unes des autres, à une position de fermeture du flasque 5 où les plaques 13 sont réunies en une couronne.

Dans le mode de réalisation illustré, chaque flasque 5 comprend une première plaque 13A qui s'étend sur un secteur angulaire d'environ 180°, une seconde plaque 13B et une troisième plaque 13C qui s'étendent toutes les deux sur un secteur angulaire de 90° environ. Chacune de la seconde plaque 13B et de la troisième plaque 13C est attachée à une extrémité respective de la première plaque 13A par l'intermédiaire d'une liaison à charnière 11, dont l'axe de pivotement est à peu près perpendiculaire au plan principal de cette plaque.

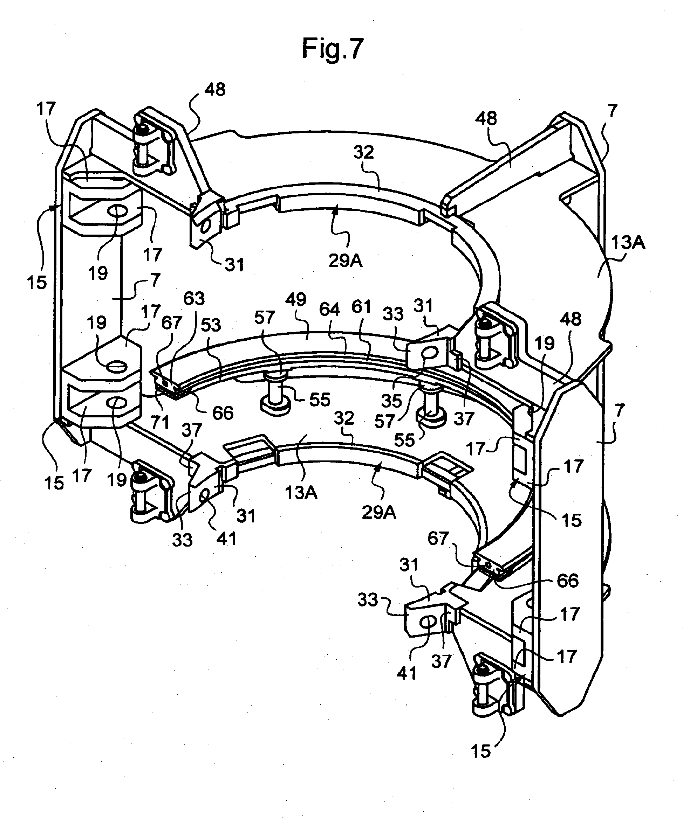

En faisant référence à la figure 7, une première plaque 13A de chaque flasque 5 supporte en chacune de ses extrémités une partie femelle 15 de la liaison à charnière 11, laquelle partie comprend deux pattes 17 attachées à cette première plaque 13A par l'intermédiaire d'une traverse 7. Les pattes 17 font saillie de la traverse 7 de manière que leur plan principal respectif s'étende parallèlement au plan principal de la première plaque 13A.

Chacune des pattes 17 est percée d'un orifice 19, les orifices 19 d'une même liaison à charnière 11 se trouvant mutuellement alignés, et s'étendant à peu près perpendiculairement au plan principal de la première plaque 13A.

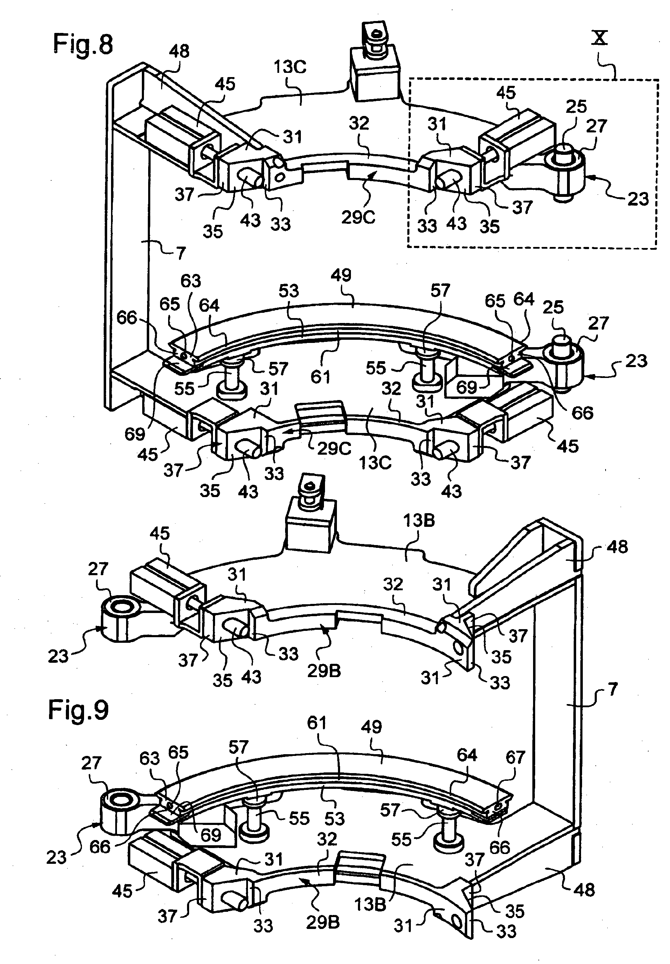

En faisant référence aux figures 8 et 9, la seconde plaque 13B et la troisième plaque 13C de chaque flasque 5 supportent chacune à l'une de leurs extrémités une partie mâle 23 de la liaison à charnière 11. Cette partie mâle 23 comprend un tourillon 25 (non représenté sur la figure 9) correspondant aux orifices 19 de la partie femelle 15 et supporté par un palier de rotation 27, par exemple sous la forme d'un coussinet.

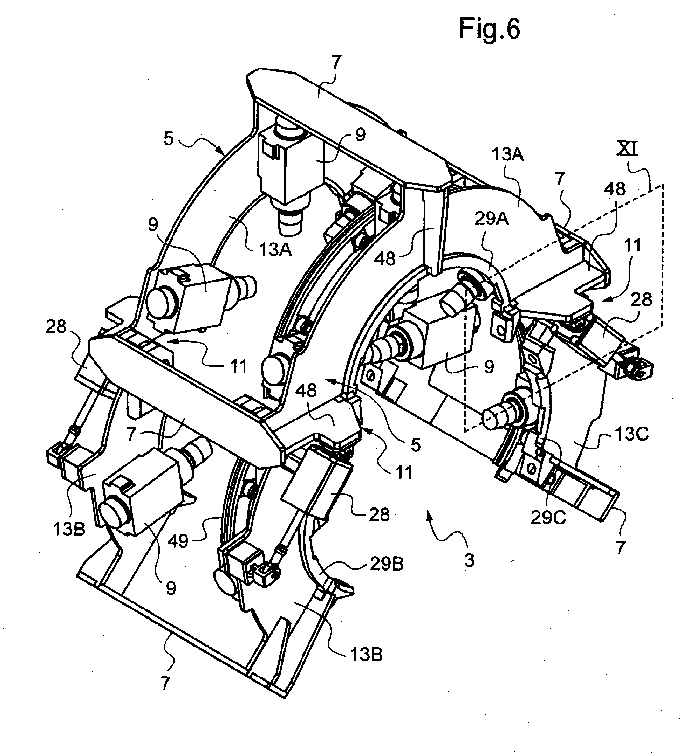

La bride 3 peut se trouver dans une position ouverte (visible sur la figure 6) où les éléments de châssis, formés chacun par l'assemblage de plaques homologues des deux flasques 5 et des traverses 7 qui les relient entre elles, sont écartés les uns des autres ou une position fermée (visible sur les figures 2 à 5) où ces éléments de châssis sont réunis en un châssis d'allure cylindrique, de base circulaire. Le déplacement des éléments de châssis les uns par rapport aux autres se fait sous l'action de vérins d'ouverture/fermeture 28, fixés sur chaque flasque 5.

Chaque flasque 5 supporte un système de verrouillage, actionnable dans la position de fermeture du flasque, qui maintient les première 13A, seconde 13B, et troisième 13C plaques fixement les unes par rapport aux autres. Les systèmes de verrouillage des flasques 5 peuvent être commandés simultanément, ou de manière indépendante l'un de l'autre, selon les applications envisagées.

Chacune des première 13A, seconde 13B et troisième 13C plaques supporte sur son bord intérieur circulaire une armature de renfort respective sous la forme d'une pièce d'allure générale profilée et qui s'étend en longueur suivant une portion de cercle correspondant au secteur angulaire de la plaque à laquelle elle est attachée, ici par boulonnage.

Dit autrement, chaque plaque présente une armature de renfort sous la forme générale d'un profilé courbe dont la courbure correspond au bord intérieur de cette plaque.

Ainsi, chaque première plaque 13A (figure 7) supporte une première armature de renfort 29A, chaque seconde plaque 13B (figure 9) supporte une seconde armature de renfort 29B, et chaque troisième plaque 13C (figure 8) supporte une troisième armature de renfort 29C.

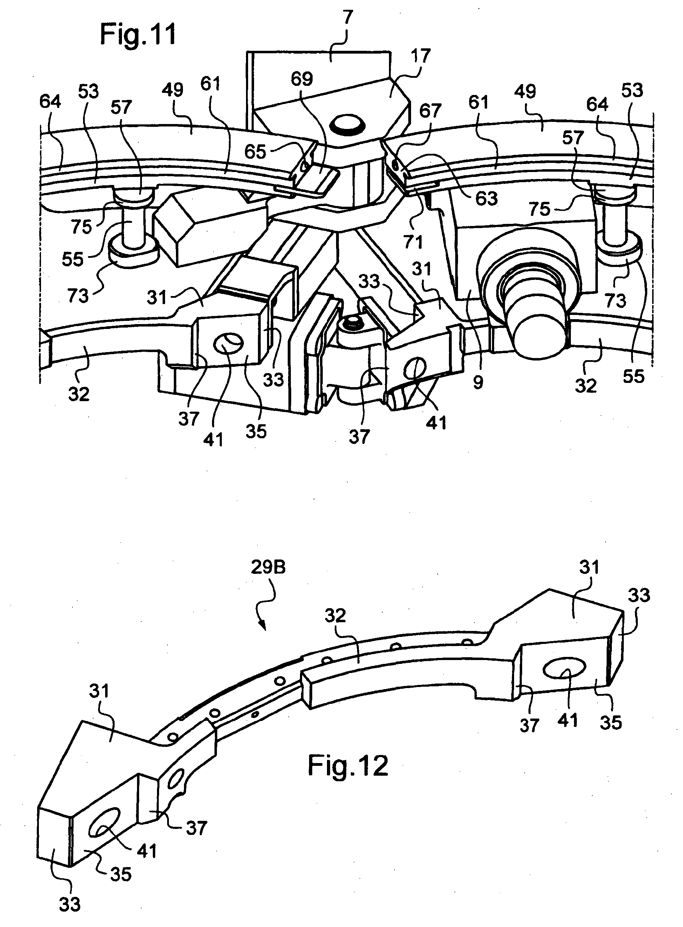

En faisant référence aux figures 7 à 9, ainsi qu'à la figure 12, chaque armature de renfort présente à chacune de ses extrémités une portion élargie 31, les portions élargies 31 d'une armature étant reliées entre elles par une portion profilée 32, de section transversale essentiellement carrée. Chaque portion élargie 31 présente, avec une portion élargie 31 adjacente, solidaire d'une plaque voisine, des faces homologues réalisant conjointement une liaison par coopération de forme, active au voisinage de la position de fermeture du flasque 5.

Chaque portion élargie 31 présente une première surface d'extrémité 33 et une seconde surface d'extrémité 37, planes, qui s'étendent perpendiculairement au plan principal de la plaque qui les supporte, et à peu près radialement par rapport à cette dernière.

Chaque portion élargie 31 présente encore une surface de raccordement 35, plane également, qui relie la première surface d'extrémité 33 à la seconde surface d'extrémité 37.

Par convention, on définit la première face d'extrémité 33 d'une portion élargie 31 comme la surface d'extrémité située à peu près dans le prolongement de la portion profilée 32, tandis que la seconde face d'extrémité 37 se trouve, elle, radialement décalée par rapport à cette portion profilée 32.

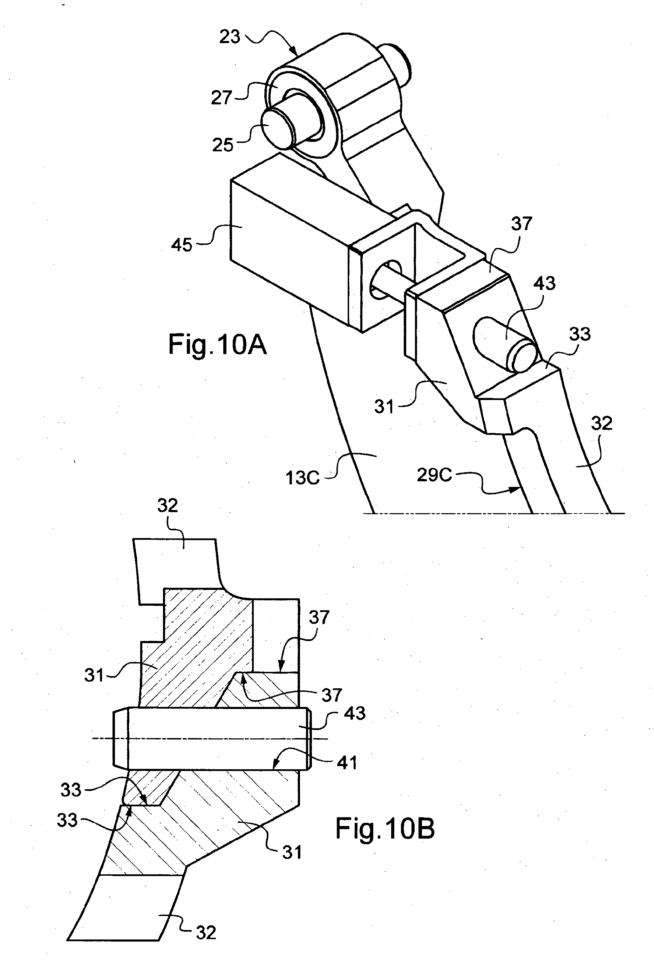

En faisant référence en outre aux figures 10A, 10B et 11, les portions élargies 31 qui coopèrent dans une même liaison, c'est-à-dire qui sont disposées en des extrémités adjacentes de plaques voisines d'un même flasque sont agencées de manière à s'engager mutuellement dans la position de fermeture du flasque, à savoir :
- la première surface d'extrémité 33 d'une portion élargie 31 se trouve en regard de la première surface d'extrémité 33 de l'autre portion élargie 31 ;
- la seconde surface d'extrémité 37 d'une portion élargie 31 se trouve en regard de la seconde surface d'extrémité 37 de l'autre portion élargie 31 ;
- les surfaces de raccordement 35 des deux portions élargies se trouvent en regard l'une de l'autre.

Chaque portion élargie 31 présente un alésage 41 respectif qui est percé à peu près radialement et débouche sur la surface de raccordement 35 à peu près centralement.

Lorsqu'un flasque 5 est ouvert (voir figure 10A par exemple), dans chacune des liaisons de ce flasque, l'un des alésages 41 loge un doigt de verrouillage 43, en forme générale de cylindrique à base circulaire, avec un ajustement autorisant un pivotement du doigt 43 autour de son axe longitudinal et une translation suivant une direction parallèle à cet axe. Chaque doigt 43 est monté sur la tige d'un vérin de verrouillage 45 respectif, lequel vérin est fixé sur une plaque correspondante. De préférence, on prévoit une liaison rotule entre la tête du vérin de verrouillage 45 et le doigt 43 qu'il déplace.

Lorsqu'un flasque 5 est en position fermée dans chacune des liaisons de ce flasque, les portions élargies 31 sont mutuellement engagées, et les vérins de verrouillage 45 peuvent être actionnés pour déplacer leur doigt de verrouillage 43 respectif jusqu'à ce que ce dernier pénètre en partie dans l'alésage 41 d'une portion élargie 41 adjacente (voir figure 10B par exemple). Lorsque l'ensemble des doigts de verrouillage 43 sont engagés dans les alésages 41 d'un flasque 5, ce flasque 5 se trouve dans un état verrouillé.

Les alésages 41 homologues peuvent être légèrement décalés l'un par rapport à l'autre : la distance qui sépare l'axe d'un alésage 41 de la seconde surface d'extrémité 37 de la même portion élargie 31 peut légèrement différer de la distance qui sépare l'axe de alésage 41 homologue de la seconde surface d'extrémité 37 homologue. Ainsi, l'engagement du doigt 43 dans l'alésage homologue 41 provoque une pression de contact mutuel entre certaines au moins des premières et seconde 37 surfaces homologues.

Ici, le décalage est tel que l'on assure, en position verrouillée d'un flasque 5, que la pression de contact en question s'opère entre les secondes surfaces d'extrémité 37 de l'ensemble des liaisons de ce flasque. Ceci permet d'obtenir une continuité de matière entre les différentes armatures de renfort 29 qui améliore la résistance mécanique du flasque.

Par exemple, le décalage en question peut être de quelques centièmes de millimètres, par exemple 3. Les premières surfaces d'extrémité 33 sont usinées avec des tolérances de fabrication qui assurent que le contact est intégralement réalisé entre les secondes surfaces d'extrémité 37, c'est-à-dire que les premières surfaces d'extrémité 33 ne viennent pas en appui l'une contre l'autre lorsque le flasque 5 qu'elles composent est verrouillé.

Tels que décrit, les portions élargies 31, les doigts de verrouillage 43 et les vérins de verrouillage 45 assurent conjointement une double fonction, à savoir une fonction de serrage d'un flasque 5 mettant en appui les plaques qui le composent l'une contre l'autre par l'intermédiaire des secondes surfaces d'extrémité 37, et une fonction de verrouillage de ce flasque en position fermée.

À chaque fois, un vérin de verrouillage 45, le doigt 43 qu'il actionne et un couple de portions élargies 41 adjacentes forment ce que l'on peut appeler un verrou.

Les secondes surfaces 37 forment les surfaces d'appui mutuel des première 13A, seconde 13B et troisième 13C plaques d'un même flasque les unes contre les autres.

En position fermée/verrouillée, les armatures de renfort d'un flasque 5 s'étendent conjointement suivant un cercle correspondant au bord central de ce flasque 5, et forment alors ce que l'on pourrait appeler un anneau de reprise d'efforts. Chacune des première 29A, seconde 29B et troisième 29C armatures est reliée mécaniquement à une ou plusieurs des traverses 7 par l'intermédiaire de plaques de renforcement 48, qui sont fixées de manière que leur plan principal s'étende radialement et perpendiculairement à la plaque correspondante. Chaque plaque de renforcement 48 présente une portion échancrée, ici terminale, venant en butée, sensiblement radialement, avec une armature de renfort. Des plaques de renforcement 48 sont disposées à chacune des extrémités adjacentes de la seconde plaque 13B et de la troisième plaque 13C. Ces plaques de renforcement 48, au voisinage de leur portion échancrée, viennent en appui par une grande face principale contre une surface homologue d'une portion élargie 31. En option, des plaques de renforcement supplémentaires (non représentées) peuvent être prévues, lesquelles présentent une partie recourbée qui vient en prise autour d'une portion profilée 32 d'une armature de renfort et s'appuient sur la plaque correspondante, ce qui améliore encore la résistance du flasque 5, en épargnant ainsi les plaques composant ce flasque. Ces dernières peuvent dès lors présenter une épaisseur réduite.

Les surfaces de raccordement 35 s'étendent perpendiculairement au plan principal de la plaque qui supporte l'armature de renfort correspondante, et sont inclinées, ici de manière à s'éloigner du bord circulaire intérieur du flasque 5, pour éviter tout phénomène d'interférence à la fermeture/ouverture du flasque 5 correspondant.

En faisant référence aux figures 2 à 7, ainsi qu'à la figure 11, l'un des flasques 5 supporte un dispositif de guidage pour des outils ou un chariot porte-outils. Ce dispositif de guidage comprend un jeu de rails 49 s'étendant chacun suivant une portion de cercle dont l'amplitude angulaire correspond à celle de la plaque qui le supporte.

Chaque rail 49 est supporté sur sa plaque respective par une plaque-support 53 s'étendant de manière correspondante, contre laquelle il vient en appui par une première grande face. Chaque plaque-support 53 est elle-même supportée sur une grande face de la plaque en question par des colonnes 55 qui s'attachent sur une grande face opposée à une grande face en appui contre la première grande face du rail 49 correspondant.

Entre chaque colonne 55 et la plaque-support 53 qu'elle soutient est intercalée une pièce élastique, réalisée ici sous la forme d'un cylindre 57 en matière élastique, par exemple en caoutchouc. Ceci autorise un déplacement limité du rail suivant six degrés de liberté. Chaque colonne 55 munie de son cylindre élastique forme un support élastique par l'intermédiaire duquel un rail 49 est, en partie au moins, relié à une plaque d'un flasque 5.

Le cylindre 57 est un "silentbloc" de la société de droit belge Paulstra (nom commercial enregistré). Des éléments souples de type différent (ressorts, rondelles belleville ou autres) peuvent être utilisés, en remplacement ou en complément des cylindres 57.

Chaque rail 49 est réalisé sous la forme d'un profilé qui présente une portion de corps 61, attachée à sa première grande face, et une portion de guidage 63 adjacente à la portion de corps 61 et qui présente une grande face libre, opposée à la première grande face. Ici, la portion de guidage 63 est plus large que la portion de corps.

En la portion de guidage 63, la grande face libre est bordée de part et d'autre d'une face de guidage 64 respective, sous la forme chacune de deux surfaces agencées en V, propre à former un tronçon de guidage pour des outils ou des chariots porte-outils.

Les extrémités adjacentes de rails 49 voisins présentent, à chaque fois, des faces homologues conformées en une liaison par coopération de forme, active au voisinage de la position de fermeture du flasque 5.

Chaque liaison par coopération de forme comprend un pion de centrage 65, qui fait saillie d'une surface d'extrémité plane 66, disposée sensiblement radialement d'un rail 49, et un orifice de centrage 67 ménagé dans une surface homologue 66 d'un rail 49 voisin. L'ajustement peut être du type H7g6, tel que défini dans les normes ISO.

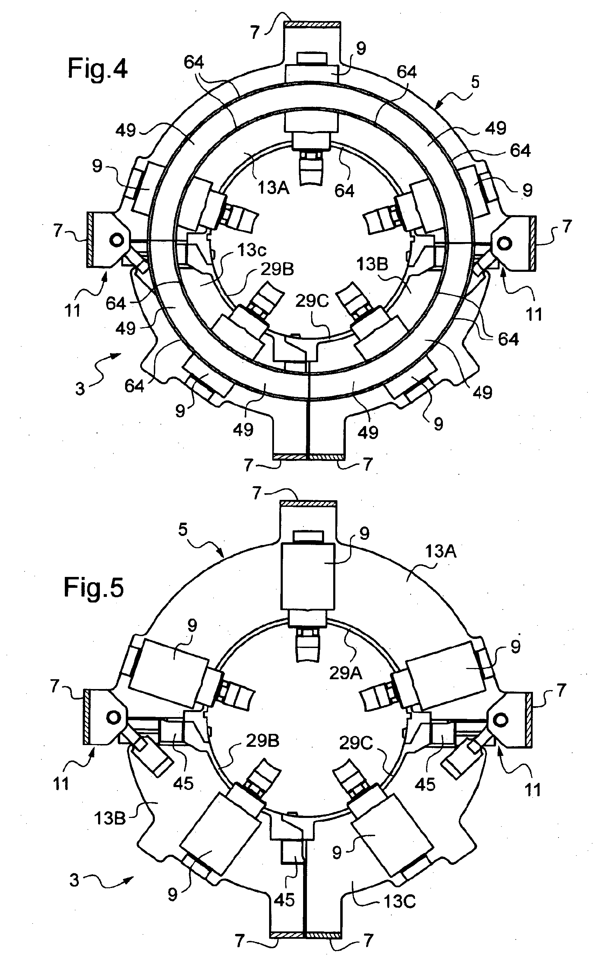

Lorsqu'un flasque 5 est fermé, la liaison par coopération de forme assure le centrage des surfaces d'extrémités 66 adjacentes des rails 49 voisins, les unes par rapport aux autres, en guidant les rails 49 en question, dans un déplacement par rapport à la plaque qui les supporte dans la mesure autorisée par la déformation des cylindres élastiques 57, jusqu'à une position où ils forment conjointement un chemin de guidage, ici annulaire (voir figure 4).

Chaque liaison par coopération de forme comprend en outre une languette d'alignement 69, faisant saillie de la face d'extrémité plane 66 d'un rail 49 et une rainure d'alignement 71 ménagée dans la surface homologue de la face adjacente d'un rail 49 voisin. Ici, chaque rainure 71 est réalisée en ménageant un évidement sur la face de la plaque-support 53 en contact avec le rail 49 supporté, sur une portion d'extrémité correspondante de celle-ci.

Lorsque le flasque 5 est fermé, la liaison par coopération de forme assure l'alignement des rails 49 les uns par rapport aux autres, plus précisément de leurs bords de guidage 64, en guidant les rails 49 en question dans un déplacement par rapport à la plaque qui les supporte, dans la mesure autorisée par la déformation des cylindres élastiques.

Les colonnes 55 font saillie des plaques qui les supportent, à peu près perpendiculairement au plan principal de ces plaques. Les colonnes 55 sont attachées par une portion de pied 73 à leur plaque respective et par une portion de tête 75 à une plaque-support 53 par l'intermédiaire d'un cylindre élastique 57. Les pieds 73 sont répartis sur un cercle de diamètre légèrement inférieur au diamètre du cercle sur lequel les têtes 75 sont réparties.

Ainsi, lorsque le dispositif de serrage/verrouillage du flasque 5 est actionné, les cylindres élastiques 57 travaillent en cisaillement et génèrent une pression de contact des surfaces planes d'extrémités 66 les unes contre les autres. Ainsi, on obtient un système de fermeture du chemin de guidage, indirectement commandé par le système de verrouillage du flasque 5, avec un appui sous contrainte des rails 49 les uns contre les autres, qui assure l'intégrité nécessaire du chemin de guidage, même dans des conditions de chargement de ce chemin, en particulier par les outils ou les porte-outils.

Les cylindres élastiques sont choisis, dimensionnés et positionnés de manière à obtenir une pression de contact d'un niveau prédéfni, qui dépend en grande partie de la masse des outils et/ou porte-outils que l'on souhaite guider, et, le cas échéant, des efforts que ces outils, en condition de travail, exercent sur le chemin de guidage.

Lorsqu'un pion de centrage 65 est engagé dans l'orifice 67 correspondant, le positionnement des faces d'extrémités 66 l'une par rapport à l'autre est assurée. Une fois la languette 69 engagée dans la rainure 71, l'alignement des surfaces de guidage 64 des différents rails 49 est assuré.

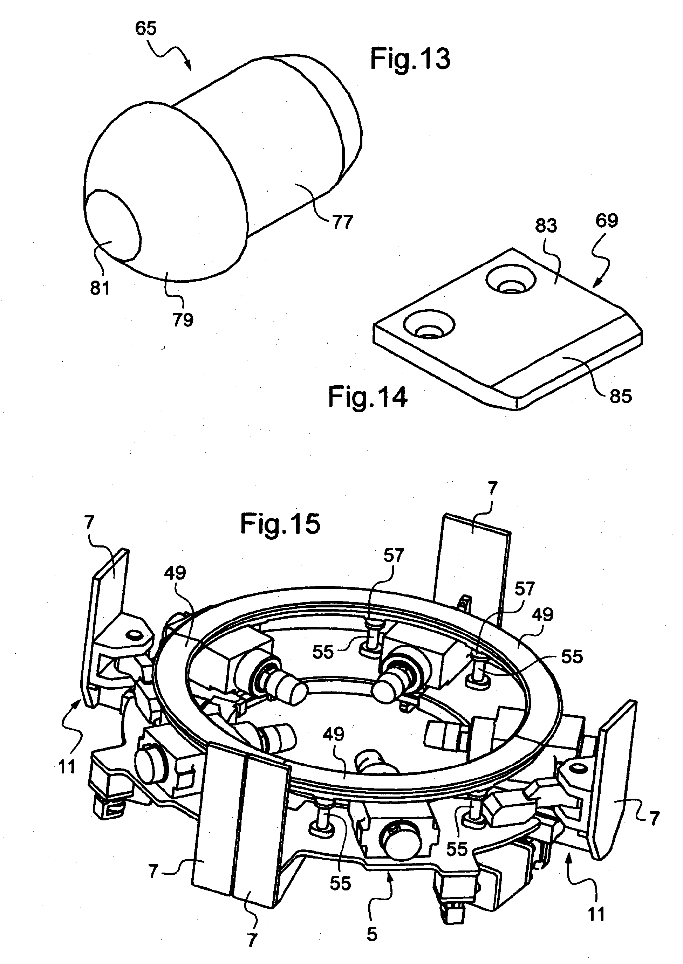

En faisant référence à la figure 13, un pion 65 présente une forme de révolution et comprend une portion d'extrémité cylindrique 77, destinée à être logée dans trou ménagé sur la face d'extrémité 66 d'un rail 49, et une portion hémisphérique 79 adjacente, dont l'extrémité opposée à la portion cylindrique 77 présente un méplat 81.

En faisant référence à la figure 14, la languette 69 présente une allure généralement plate et rectangulaire, et comprend une portion de section transversale constante 83, destinée à être emprisonnée entre la première grande face d'un rail 49 et la plaque-support 53 correspondante dans un évidemment ménagé sur la grande face correspondante de cette plaque-support 53 en une portion d'extrémité, et une portion 85 de section transversale qui se rétrécie progressivement en direction de son extrémité libre à la manière d'un coin, en largueur et en épaisseur.

Le profil en forme de double V autorise un support de torches de soudage par exemple, mais s'applique à d'autres outils. Lorsque le système de verrouillage est fermé, les rails 49 sont en appui les uns contre les autres par leurs faces d'extrémité, et fournissent ainsi un guidage circulaire complet et précis aux outils et/ou porte-outils.

On assure ainsi une continuité des surfaces de guidage 66 lorsque le flasque 5 est en position de fermeture, ainsi que leur positionnement, qui sont des caractéristiques indispensables à la réalisation d'un chemin de guidage convenable.

En effet, en cas de flexion entre deux rails 49, même légère, les outils ou les porte-outils se bloquent en passant d'un rail à l'autre. De manière analogue, un décalage de deux rails ferait sauter les outils ou les porte-outils au moment de passer d'un rail 49 à l'autre, dont il résulterait des défauts de soudure en particulier, ou, de manière plus générale, un travail imprécis.

Les colonnes 55, dotées de leurs cylindres élastiques 57, forment des supports déformables élastiquement, conformément à l'invention, pour les éléments de rails 49. De tels supports permettent d'ajuster les rails les uns par rapport aux autres, indépendamment de l'ajustement des plaques formant le flasque 5 entre elles. Ceci permet d'usiner les plaques en question avec de plus grandes tolérances et d'empêcher que d'éventuelles déformations sur les plaques ne résultent en une déformation du chemin de guidage.

Le maintien du chemin de guidage en position fermée est assuré ici, outre le travail en cisaillement des cylindres élastiques 57, par l'effet de serrage obtenu grâce au dispositif de verrouillage décrit. Il faut comprendre que ce maintien peut être obtenu dès lors qu'un effet de serrage des plaques les unes contre les autres est obtenu, que ce soit avec un dispositif spécifique, y compris de réalisation différente du dispositif de serrage/verrouillage décrit, un dispositif assurant par ailleurs une fonction première différente, ou d'une quelconque autre manière. Le choix du dispositif de serrage dépendra principalement de la pression de contact nécessaire entre les rails 49. Il faut comprendre, d'une part, que les capacités de résistance de la fermeture du chemin de guidage dépendent en grande partie de l'intensité du serrage des plaques les unes contre les autres, d'autre part, que les exigences de résistance de cette fermeture peuvent différer selon les applications envisagées, et en particulier en fonction de la masse des outils ou porte-outils supportés.

Par exemple, les vérins de verrouillage tendent eux aussi à serrer les plaques les unes contre les autres. Les vérins d'ouverture/fermeture également. L'état de serrage résultant des uns et/ou des autres de ces vérins peut conduire à une résistance de la fermeture du chemin de guidage suffisante, pour certaines applications au moins. Dans ce cas, le dispositif de verrouillage/serrage décrit, bien qu'avantageux en ce qu'il confère aux flasques 5 une bonne rigidité tout en leur conservant une masse assez faible, apparaît optionnel. Dans d'autres cas, l'effet de serrage obtenu par le dispositif décrit peut s'avérer insuffisant et nécessiter un dispositif de fermeture supplémentaire, y compris directement monté entre les rails 49 par exemple au moyen de grenouillères.

Les armatures de renfort décrites sont avantageuses en ce qu'elles permettent de réaliser un flasque 5 très rigide sans en augmenter la masse. Pour autant, dans des applications où les phénomènes liés à la masse des flasques 5 ne présenteraient que peu d'importance, on pourrait obtenir une rigidité voisine en utilisant les plaques plus épaisses, par exemple.

On a décrit des plaques qui sont assemblées par l'intermédiaire de liaisons à charnière, lesquelles autorisent un pivotement des plaques les unes par rapport aux autres. L'invention n'est pas limitée à ce type de liaison, mais englobe toutes les liaisons qui pourraient permettre à un jeu de plaques formant un flasque d'adopter une position de fermeture et une position d'ouverture, quel que soit le mouvement relatif autorisé par ces liaisons.

Le chemin de guidage annulaire décrit plus haut est particulièrement adapté au travail de pièces de révolution notamment. Pour le travail de pièces mécaniques d'un type différent, ou pour des travaux ne nécessitant pas que les outils effectuent un tour complet autour de la pièce mécanique, on peut envisager des chemins de guidage non fermés, voire de forme presque quelconque.

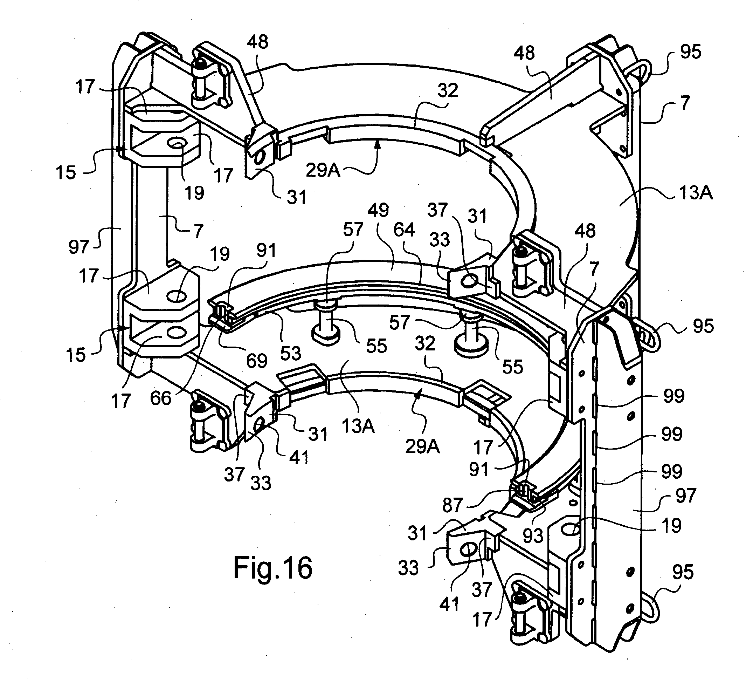

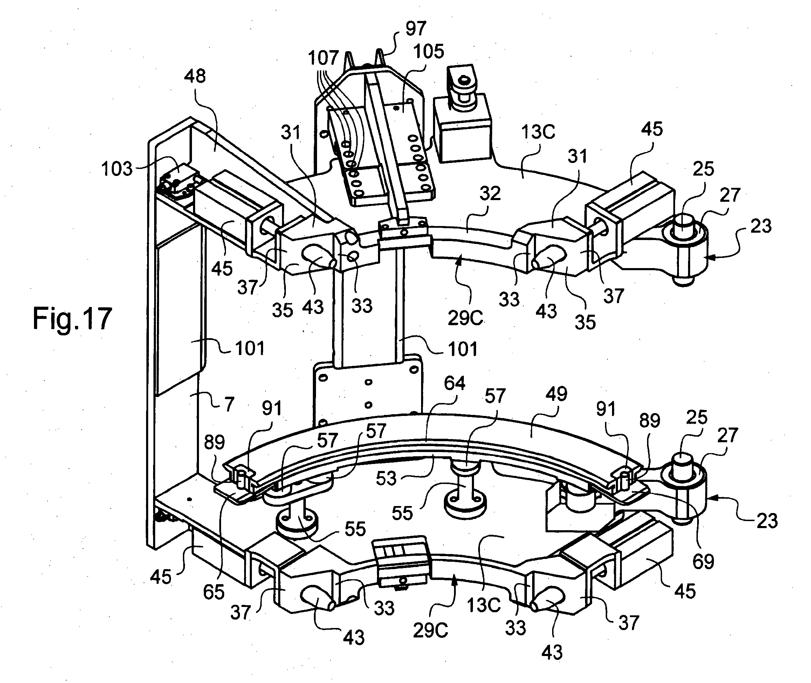

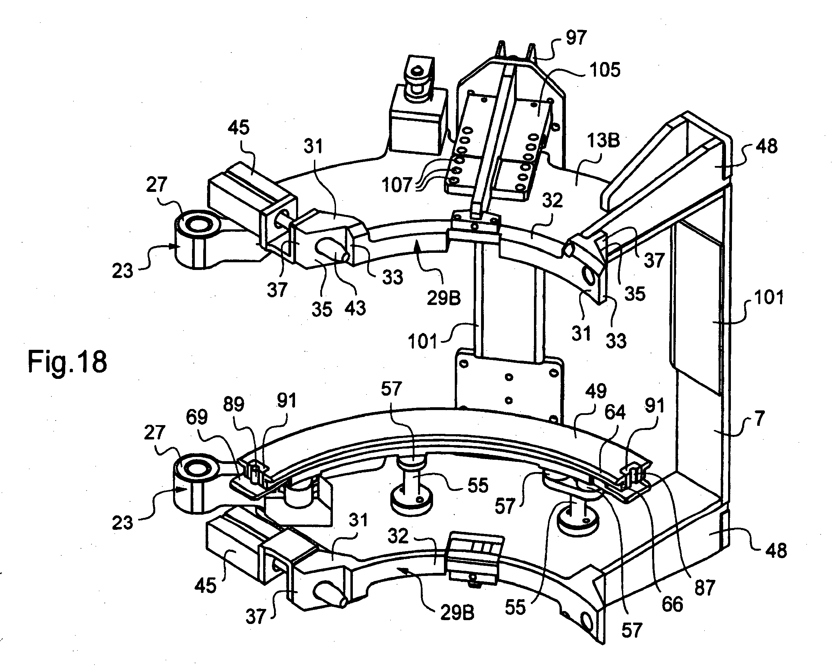

On fait maintenant référence aux figures 16 à 20 qui montrent une variante de réalisation de la bride 3 décrite ci-dessus. Cette variante de la bride 3 présente les particularités suivantes, qui, le cas échéant, peuvent se combiner aux caractéristiques décrites en relation ave la bride 3 :
- Les faces homologues des extrémités adjacentes de rails 49 voisins présentent un orifice de centrage 87 en forme de demi-cylindre, en remplacement de l'orifice de centrage 67. Le demi-cylindre est orienté de manière que son axe central soit perpendiculaire à la grande face libre du rail 49. Ici; l'orifice de centrage 87 débouche sur la languette 69 d'une part, et sur la grande face libre du rail 49.
- Les orifices 87 de deux extrémités de rails 49 adjacentes reçoivent un pion de centrage 89 commun, de forme cylindrique, en remplacement du pion de centrage 65 hémisphérique.
- Chaque orifice 87 est ménagé dans une pièce rapportée 91, logée dans la face d'extrémité de son rail 49 respectif. La pièce rapportée 91 est agencée en tant que pièce d'usure.
- Chaque rail 49 est muni d'une crémaillère 93 qui s'étend le long de celui-ci, en dessous de la face de guidage 64 et au-dessus de la plaque-support 53, sur la périphérie extérieure du rail 49.
- Le châssis est muni d'anneaux de levage 95 qui facilitent son transport.
- Certaines au moins des traverses 7 sont pourvues d'une nervure de renfort 97 rapportée, par exemple fixée au moyen de points de soudure 99.
- Certaines au moins des traverses 7 sont pourvues d'un capot 101 en matériau glissant, par exemple du type connu sous le nom de "NOFRIX", pour faciliter le passage des conduites nécessaires au fonctionnement du dispositif.
- Un contacteur de fin de course 103 est prévu derrière chaque vérin de verrouillage 45 pour s'assurer de la fermeture correcte des verrous.
- Chaque vérin de serrage est monté sur sa plaque respective par une platine intermédiaire 105 doté d'une pluralité d'orifices de fixation 107 décalés radialement. Cela permet d'adapter la position de montage des vérins de serrage à des diamètres de tubes différents.
- Certaines des colonnes 65 sont dotées de plusieurs cylindres élastiques 57, par exemple deux.

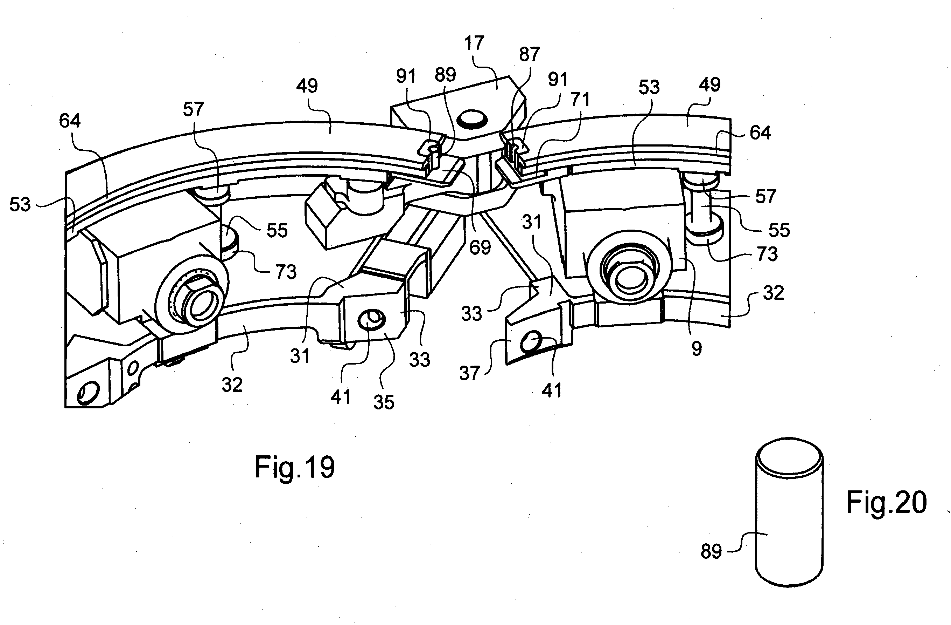

- Sur la figure 20, les vérins de serrage 49 sont montrés sans leur tige mobile.

L'invention n'est pas limitée aux modes de réalisation décrits plus haut, à titre d'exemple uniquement, mais englobe toutes les variantes que pourra envisager l'homme de l'art, en particulier :
- chaque rail 49 peut s'étendre sur un secteur angulaire différent de celui de la plaque qui le supporte ;
- la plaque-support 53 est optionnelle, le rail 49 pouvant être attaché aux colonnes 55 directement ;
- des cylindres élastiques 57 peuvent être disposés aux pieds des colonnes 55, en complément ou en remplacement des cylindres élastiques 57 disposés aux têtes de ces colonnes ;
- sur le principe du flasque 5 décrit, on peut réaliser des flaques 5 de toutes formes et comprenant un nombre quelconque de plaques ;
- telle que décrite la bride 3 est particulièrement adaptée à l'assemblage de tubes entre eux par soudage pour former un produit de longueur importante, comme un pipeline par exemple. On peut procéder comme suit :
   - l'un des flasques 5 est clampé sur une portion d'extrémité du produit long,
   - un tube est approché de la portion d'extrémité du produit long, puis le second flasque 5 est clampé sur la portion d'extrémité adjacente du tube,
   - les vérins de maintien sont actionnés pour aligner le tube et le produit long,
   - on réalise un cordon de soudure, en déplaçant un ou plusieurs outils.
- pour d'autres applications la bride 3 peut ne comporter qu'un flasque 5, comme le montre la variante de réalisation illustrée sur la figure 15 ;
- le dispositif de verrouillage peut ne comporter qu'un seul verrou, quel que soit le nombre de plaques composant le flasque à verrouiller ;
- le rail 49 peut présenter une section en forme de carré, et/ou être tubulaire, et/ou présenter toute autre forme qui permet le guidage ;
- des supports déformables élastiquement, conformément à l'invention, pour les rails 49 pourraient être réalisés sous des formes différentes, par exemple avec des ressorts, des rondelles Belleville, et autres, en remplacement ou en complément des cylindres élastiques ;
- des doigts de centrage, par exemple au nombre de trois, qui se déploient pour venir s'engager dans le chanfrein habituellement usiné sur la face d'extrémité des tubes peuvent être prévus. Ils sont avantageusement disposés, une fois déployés, au niveau de la trajectoire des torches de soudage et/ou des outils se déplaçant sur le chemin de guidage;
- des supports à billes peuvent être montés sur les flasques pour centrer de manière préalable le châssis, soulager la manutention et/ou faciliter le coulissement du châssis par rapport au tube. Par exemple, ces supports à billes permettent de déplacer le châssis sur un tube à la main, jusqu'à l'engagement des doigts de centrage dans le chanfrein du tube en question. Les billes peuvent être remplacées par des galets.

## Revendications

1. Dispositif d'aide au travail de pièces mécaniques comprenant :
- un flasque (5) comprenant au moins deux pièces (13A,13B,13C) assemblées entre elles avec possibilité de déplacement relatif dans un plan commun jusqu'à une position de fermeture du flasque (5) où lesdites pièces sont réunies ;
- un dispositif de serrage, actionnable dans la position de fermeture du flasque, pour mettre en appui mutuel lesdites pièces (13A,13B,13C) ;
- au moins deux rails (49) ;
**caractérisé en ce qu'**il comprend en outre un jeu de supports (55), par l'intermédiaire desquels chaque rail (49) est relié à au moins une pièce (13A,13B,13C) respective dudit flasque avec possibilité de mouvements relatifs limités, ces supports (55) étant déformables élastiquement ;
- les faces d'extrémité adjacentes de deux rails (49) possèdent des surfaces homologues formant une liaison par coopération de forme, laquelle liaison est active au voisinage de la position de fermeture ;
- chaque liaison est agencée pour guider les faces d'extrémité adjacentes l'une par rapport à l'autre dans un déplacement par rapport auxdites pièces (13A,13B,13C), jusqu'à une position de travail où les rails (49) forment un chemin de guidage pour un ou plusieurs outils, et pour contribuer à maintenir ces rails (49) en appui mutuel, dans cette position de travail, lorsque le dispositif de serrage est actionné.

2. Dispositif selon la revendication 1, dans lequel lesdites surfaces homologues comprennent deux surfaces complémentaires (66) venant en appui mutuel dans la position de travail.

3. Dispositif selon l'une des revendications 1 et 2, dans lequel chaque rail (49) présente une ou plusieurs surfaces de guidage (64) et ladite liaison comprend un arrangement adapté pour assurer une continuité de ces surfaces de guidage dans ladite position de travail.

4. Dispositif selon la revendication 3, dans lequel ledit arrangement comprend au moins une languette (69) faisant saillie de la face d'extrémité (66) d'un rail (49) et une rainure (71) ménagée dans la face d'extrémité (66) adjacente d'un rail voisin, la languette (69) et la rainure (71) étant conjointement dimensionnées de manière à s'emboîter l'une dans l'autre au voisinage de la position de fermeture du flasque (5).

5. Dispositif selon la revendication 4, dans lequel la languette (69) présente une portion dont la section transversale se rétrécie progressivement en direction de son extrémité libre.

6. Dispositif selon l'une des revendications 3 à 5, dans lequel ledit arrangement comprend au moins un pion (65) faisant saillie de la face d'extrémité (66) d'un rail (49) et au moins un évidement (67) ménagé dans la face d'extrémité (66) adjacente d'un rail voisin, le pion (65) et l'évidement (67) étant conjointement dimensionnés de manière à s'emboîter l'un dans l'autre au voisinage de la position de fermeture du flasque.

7. Dispositif selon la revendication 6, dans lequel le pion (65) présente une allure au moins partiellement hémisphérique ou cylindrique.

8. Dispositif selon l'une des revendications précédentes, dans lequel les supports sont complétés par des pièces élastiques (57), intercalées entre les supports (55) et leur rail respectif (49), dans lequel les pièces élastiques (57) sont déformées à l'actionnement du dispositif de serrage et sont agencées pour que cette déformation génère une pression de contact entre les surfaces d'extrémité desdits rails (49) d'un niveau minimal prédéfini.

9. Dispositif selon la revendication 8, dans lequel les pièces élastiques (57) sont agencées de façon que le déplacement des rails (49) par rapport auxdites pièces du flasque s'effectue, au moins au voisinage de la position de fermeture, avec déformation de certaines au moins desdites pièces élastiques (57).

10. Dispositif selon l'une des revendications 8 et 9, dans lequel les pièces élastiques (57) sont agencées de manière à travailler chacune en cisaillement lorsque le dispositif de serrage est actionné.

11. Dispositif selon l'une des revendications 8 à 10, dans lequel certaines au moins des pièces élastiques (57) se présentent sous la forme d'un cylindre en matériau élastique, et chaque cylindre est attaché d'une part à l'un des supports (55) et, d'autre part, à un rail (49) et/ou une pièce (13A,13B,13C) dudit flasque (5).

12. Dispositif selon l'une des revendications précédentes, dans lequel le flasque (5) présente une allure de couronne plate.

13. Dispositif selon l'une des revendications précédentes, dans lequel le chemin de guidage présente une allure annulaire.

## Patentansprüche

1. Vorrichtung zur Unterstützung der Bearbeitung von mechanischen Teilen mit:
- einem Flansch (5), der mindestens zwei Teile (13A, 13B, 13C) aufweist, die miteinander mit der Möglichkeit einer Relativbewegung in einer gemeinsamen Ebene zueinander bis zu einer Schließstellung des Flansches (5), in der die Teile verbunden sind, zusammengefügt sind,
- einer Spannvorrichtung, die in der Schließstellung des Flansches betätigbar ist, um die Teile (13A, 13B, 13C) untereinander zusammenzudrücken,
- mindestens zwei Schienen (49),
**dadurch gekennzeichnet, dass** sie ferner einen Satz Träger (55) aufweist, über die jede Schiene (49) mit mindestens einem Teil (13A, 13B, 13C) des Flansches mit der Möglichkeit begrenzter Relativbewegungen befestigt ist, wobei diese Träger (55) elastisch verformbar sind,
- wobei benachbarte Endflächen von zwei Schienen (49) homologe Flächen aufweisen, die durch Passformen eine Verbindung bilden, wobei die Verbindung in der Nähe der Schließstellung wirksam ist,
- wobei jede Verbindung zusammengefügt ist, um die zueinander benachbarten Endflächen bei einer Bewegung relativ zu den Teilen (13A, 13B, 13C) bis zu einer Arbeitsstellung zu führen, in der die Schienen (49) einen Führungsweg für ein Werkzeug oder mehrere Werkzeuge bilden, und um dazu beizutragen, diese Schienen (49) in dieser Arbeitsstellung aneinander angedrückt zu halten, wenn die Spannvorrichtung betätigt wird.

2. Vorrichtung nach Anspruch 1, bei der die homologen Flächen zwei komplementäre Flächen (66) aufweisen, die in der Arbeitsstellung aneinander anliegen.

3. Vorrichtung nach einem der Ansprüche 1 und 2, bei der jede Schiene (49) eine oder mehrere Führungsflächen (64) aufweist, und wobei die Verbindung eine Anordnung aufweist, die so ausgestaltet ist, dass sie eine Kontinuität der Führungsflächen in der Arbeitsstellung gewährleistet.

4. Vorrichtung nach Anspruch 3, bei der die Anordnung mindestens eine Zunge (69) aufweist, die gegenüber der Endfläche (66) einer Schiene (49) vorsteht und die eine Nut (71) aufweist, die in der anliegenden Endfläche (66) einer benachbarten Schiene eingearbeitet ist, wobei die Zunge (69) und die Nut (71) gemeinsam so dimensioniert sind, dass sie sich in der Nähe der Schließstellung des Flansches (5) ineinander einfügen.

5. Vorrichtung nach Anspruch 4, bei der die Zunge (69) einen Bereich aufweist, dessen Querschnitt sich allmählich in Richtung auf ihr freies Ende verjüngt.

6. Vorrichtung nach einem der Ansprüche 3 bis 5, bei der die Anordnung mindestens einen Stift (65) aufweist, der gegenüber der Endfläche (66) einer Schiene (49) vorsteht, und mindestens eine Ausnehmung (67), die in der anliegenden Endfläche (66) einer benachbarten Schiene ausgebildet ist, wobei der Stift (65) und die Ausnehmung (67) zusammen so dimensioniert sind, dass sie sich in der Nähe der Schließstellung des Flansches ineinanderfügen.

7. Vorrichtung nach Anspruch 6, bei der der Stift (65) zumindest teilweise eine halbkugelige oder zylindrische Form aufweist.

8. Vorrichtung nach einem der vorstehenden Ansprüche, bei der die Träger durch elastische Teile (57) vervollständigt sind, die zwischen den Trägern (55) und ihrer jeweiligen Schiene (49) angeordnet sind, bei der die elastischen Teile (57) bei der Betätigung der Spannvorrichtung verformt werden, und wobei die elastischen Teile so angeordnet sind, dass diese Verformung einen Kontaktdruck einer vordefinierten minimalen Größe zwischen den Endflächen der Schienen (49) erzeugt.

9. Vorrichtung nach Anspruch 8, bei der die elastischen Teile (57) so angeordnet sind, dass die Bewegung der Schienen (49) relativ zu den Teilen des Flansches mindestens in der Nähe der Schließstellung mit einer Verformung einiger der elastischen Teile (57) einhergeht.

10. Vorrichtung nach einem der Ansprüche 8 und 9, bei der die elastischen Teile (57) so ausgebildet sind, dass sie eine Scherung erfahren, wenn die Spannvorrichtung betätigt wird.

11. Vorrichtung nach einem der Ansprüche 8 bis 10, bei der wenigstens einige der elastischen Teile (57) zylinderförmig sind und aus einem elastischen Material bestehen, und wobei jeder Zylinder einerseits an einem der Träger (55) und andererseits an einer Schiene (49) und/oder einem Teil (13A, 13B, 13C) des Flansches (5) befestigt ist.

12. Vorrichtung nach einem der vorstehenden Ansprüche, bei der der Flansch (5) die Form eines flachen Kranzes aufweist.

13. Vorrichtung nach einem der vorstehenden Ansprüche, bei der der Führungsweg ringförmig ist.

## Claims

1. Device for assisting with the working of mechanical parts, comprising:
- a flange (5) having at least two parts (13A, 13B, 13C) joined together with the ability to move relative to one another in a common plane, up to a closed position of the flange (5) in which the parts are joined together;
- a locking device that can be actuated in the closed position of the flange to bring the said parts (13A, 13B, 13C) into mutual abutment;
- at least two rails (49);
**characterised in that** it further comprises a set of supports (55) by means of which each rail (49) is connected to at least one respective part (13A, 13B, 13C) of the flange with limited relative movement possibilities, these supports (55) being resiliently deformable;
- the adjacent end faces of two rails (49) have mating surfaces forming a connection by positive locking, this connection being active in the vicinity of the closed position;
- each connection is arranged so as to guide the adjacent end faces relative to one another in a movement relative to said parts (13A, 13B, 13C), to a working position in which the rails (49) form a guide path for one or more tools, and in order to help keep these rails (49) in mutual abutment, in this working position, when the locking device is actuated.

2. Device according to claim 1, wherein the said mating surfaces comprise two complementary surfaces (66) coming into mutual abutment in the working position.

3. Device according to one of claims 1 and 2, wherein each rail (49) has one or more guide surfaces (64) and the connection comprises an arrangement adapted to ensure continuity of these guide surfaces in the working position.

4. Device according to claim 3, wherein the said arrangement comprises at least one tongue (69) projecting from the end face (66) of a rail (49) and a groove (71) provided in the adjacent end face (66) of a neighbouring rail, the tongue (69) and the groove (71) both being of the appropriate dimensions to fit into one another close to the position of closure of the flange (5).

5. Device according to claim 4, wherein the tongue (69) has a portion whose cross-section becomes progressively narrower towards its free end.

6. Device according to one of claims 3 to 5, wherein the arrangement comprises at least one stud (65) projecting from the end face (66) of a rail (49) and at least one recess (67) formed in the adjacent end face (66) of a neighbouring rail, the stud (65) and the recess (67) both being of the appropriate dimensions to fit into one another close to the position of closure of the flange.

7. Device according to claim 6, wherein the stud (65) is at least partly hemispherical or cylindrical in configuration.

8. Device according to one of the preceding claims, wherein the supports are complemented by resilient parts (57) intercalated between the supports (55) and their respective rails (49), in which the resilient parts (57) are deformed on actuation of the locking device and are arranged so that this deformation generates a contact pressure between the end surfaces of the rails (49) at a predefined minimum level.

9. Device according to claim 8, wherein the resilient parts (57) are arranged so that the displacement of the rails (49) relative to the said parts of the flange takes place, at least in the vicinity of the closed position, with deformation of at least some of said resilient parts (57).

10. Device according to one of claims 8 and 9, wherein the resilient parts (57) are arranged so that they each work with shear forces when the locking device is actuated.

11. Device according to one of claims 8 to 10, wherein at least some of the resilient parts (57) are in the form of a cylinder made of resilient material, and each cylinder is attached to one of the supports (55), on the one hand, and to a rail (49) and/or a part (13A, 13B, 13C) of said flange (5), on the other hand.

12. Device according to one of the preceding claims, wherein the flange (5) is in the form of a flat crown.

13. Device according to one of the preceding claims, wherein the guide path is of annular configuration.
